# EUROPÄISCHE PATENTANMELDUNG

(11) **EP 2 052 957 A2**
(43) Veröffentlichungstag der Anmeldung: **29.04.2009**
(21) Anmeldenummer: 08017131.7
(22) Anmeldetag: 29.09.2008
(51) Int. Cl.: B62K 19/36

(54) **Fahrradrahmen**

(30) Priorität: 17.10.2007 DE 202007014551 U
(71) Anmelder: Merida & Centurion Germany GmbH, 71106 Magstadt (DE)
(72) Erfinder: Falke, Jürgen, Gerhard, Fritz, 71634 Ludwigsburg (DE)
(74) Vertreter: Wallinger, Michael

(57) **Zusammenfassung**

Fahrradrahmen, insbesondere für Rennräder, mit einer ersten Halteeinrichtung (11) für ein erstes Rad (12) und einer zweiten Halteeinrichtung (13) für ein zweites Rad (14) sowie mit einem oberen und einem unteren Rahmenbereich (21,22), über welche die beiden Haltebereiche (11,13) verbunden sind, und einem Sitzrohr (30), welches für die Aufnahme einer Sattelstütze vorgesehen ist und ein oberes und ein unteres Ende aufweist, wobei eine Führungseinrichtung (25) das Sitzrohr (30) im oberen Rahmenbereich (21) derart beweglich führt, dass das oberer Ende des Sitzrohrs eine Winkelbewegung gegenüber dem unteren Ende des Sitzrohres ausführen kann.

## Beschreibung

Die vorliegende Erfindung betrifft einen Fahrradrahmen insbesondere für Rennräder, Mountainbikes oder dergleichen mit einer ersten Halteeinrichtung für ein erstes Rad und einer zweiten Halteeinrichtung für ein zweites Rad sowie mit einem oberen und einem unteren Rahmenbereich, über welche die beiden Halteeinrichtungen verbunden sind.

Moderne Fahrradrahmen der genannten Art zeichnen sich meist durch eine hohe Rahmensteifigkeit aus. Jedoch führt die damit verbundene Härte zusammen mit ständigen Fahrbahnerschütterungen zu einer frühzeitigen Ermüdung des Fahrers. Deshalb ist auch beim Rennradrahmen ein durch stoßabsorbierende Eigenschaften des Rahmens erreichter Komfort für den Fahrer ein wichtiger Faktor. Der Einsatz neuer Werkstoffe wie beispielsweise Carbonfaser-Verbundwerkstoffe ermöglicht es, Carbonteilen durch die Ausrichtung der Fasern bestimmte richtungsabhängige Eigenschaften mitzugeben, um die Eigenschaften des Rahmens hinsichtlich des Komforts für den Fahrer zu verbessern. Bezüglich der erforderlichen Steifigkeit des Rahmens kann jedoch nur eine begrenzte Stoßabsorption und damit Komfortsteigerung durch den Rahmen erreicht werden.

Ein Fahrrad mit erhöhtem Komfort wurde beispielsweise in der DE 202 05 539 U1 vorgeschlagen, das einen Fahrradrahmen mit über eine Feder-/ Dämpfereinrichtung schwenkbar am Rahmen angelenkte Rahmenelementen aufweist. Nachteilig wirkt sich hierbei das zusätzliche Gewicht sowie der hohe Bauaufwand für die Feder-/ Dämpfereinrichtung sowie für die erforderlichen Gelenkeinrichtungen für einen Fahrradrahmen aus. Zur Ermöglichung eines aktiven Federverhaltens des Sattels und damit zu einer aktiven Entlastung des menschlichen Körpers schlägt das deutsche Gebrauchsmuster DE 209 12 639 U1 ein Fahrrad mit einem bogenförmigen Rahmen vor, in dessen tiefsten Bereich ein zur Vertikalen etwas nach hinten geneigtes Sattelrohr befestigt ist. Der bogenförmige Rahmen führt bzw. trägt mit einem an dessen Enden angebrachten Zugseil das Sattelrohr. Neben hohen Komfortwerten aufgrund der Rahmenelastizität weist ein derartig gestalteter Rahmen nur eine geringe Steifigkeit auf, weshalb er beispielsweise schon für einen ambitionierteren Freizeitfahrer wenig geeignet ist.

Die vorliegende Erfindung stellt sich daher die Aufgabe, einen Fahrradrahmen zur Verfügung zu stellen, der eine ausreichende Steifigkeit mit hohem Komfort für den Fahrer verbindet.

Diese Aufgabe wird erfindungsgemäß durch den Gegenstand des Anspruchs 1 gelöst. Vorteilhafte Weiterbildungen sind Gegenstand der Unteransprüche.

Die Lösung der Aufgabe sieht einen Fahrradrahmen vor, der sich insbesondere für Rennräder Mountainbikes oder dergleichen eignet. Dieser Fahrradrahmen weist eine erste Halteeinrichtung für ein erstes Rad und eine zweite Halteeinrichtung für ein zweites Rad auf, ferner einen oberen und einen unteren Rahmenbereich, über welchen die beiden Halteeinrichtungen verbunden sind und ein Sitzrohr, welches ein oberes und ein unteres Ende aufweist. Eine Führungseinrichtung führt das Sitzrohr im oberen Rahmenbereich derart beweglich, dass das obere Ende des Sitzrohrs eine Winkelbewegung gegenüber dem unteren Ende des Sitzrohres ausführen kann.

Die vom erfindungsgemäßen Fahrradrahmen ermöglichte Winkelbewegung im Sitzrohr erfolgt bei senkrecht stehendem Fahrrad im Wesentlichen in einer vertikalen Ebene, in welcher die Fahrradlängsachse verläuft. Dabei kann sich der Sattel des Radfahrers gegenüber dem Fahrradrahmen und gegenüber der bevorzugt starren Verbindung von Vorder- und Hinterrad bewegen, wodurch Stöße durch Fahrbahnunebenheiten nicht starr auf den Sattel übertragen werden. In der Folge führt dies zu einem erhöhten Komfort für den Radfahrer.

Die erste Halteeinrichtung nimmt das Vorderrad schwenkbar am Fahrradrahmen auf und umfasst bevorzugt eine Gabel, die drehbar am Rahmen gelagert ist. Die zweite Halteeinrichtung weist bevorzugt Sitz- und Kettenstreben auf, mit Ausfallenden zur Aufnahme einer Hinterradachse an ihren bevorzugt jeweils verbundenen Enden. Die zweite Halteeinrichtung kann aber auch nur ein Strebenpaar umfassen oder als Hinterradschwinge oder dergleichen ausgebildet sein.

Der untere Rahmenbereich verbindet bevorzugt die erste mit der zweiten Halteeinrichtung und dient ferner bevorzugt zur Aufnahme eines Tretlagers und vorzugsweise auch zur Aufnahme bzw. zur Abstützung des Sitzrohres. Auch der obere Rahmenbereich verbindet bevorzugt die erste mit der zweiten Halteeinrichtung. Es sind allerdings auch Gestaltungen denkbar, in denen nur der obere oder nur der untere Rahmenbereich die erste mit der zweiten Halteeinrichtung verbindet. In einer solchen Ausführungsform ist der obere Rahmenbereich bevorzugt nur mit der ersten Halteeinrichtung verbunden.

Im oberen Rahmenbereich ist ferner eine Führungseinrichtung angeordnet, in welcher das Sitzrohr beweglich geführt ist. Das Sitzrohr ist bevorzugt so ausgebildet, dass es zur Aufnahme einer Sattelstütze geeignet ist. Vorzugsweise verläuft das Sitzrohr bei senkrecht stehendem Fahrrad im Wesentlichen vertikal und ist so am Fahrradrahmen angeordnet, dass sich sein oberes Ende bzw. das obere Ende einer darin aufgenommenen Sattelstütze im Sitzbereich eines Fahrradfahrers in Sitzposition befindet. In einer bevorzugten Ausführungsform ist das Sitzrohr mit dem oberen Rahmenbereich integral ausgebildet. In einer weiteren bevorzugten Ausführungsform ist die Sattelstütze mit dem Sitzrohr integral ausgebildet, so dass ein Fahrradsattel direkt am oberen Ende des Sitzrohres montiert werden kann.

In einer bevorzugten Ausführungsform weist die Führungseinrichtung eine elastische Lagerung auf, welche eine Bewegung zwischen dem Sitzrohr und dem oberen Rahmenbereich ermöglicht. Vorzugsweise wird eine derartige Bewegung von der elastischen Lagerung auch gedämpft. Eine derartige Lagerung des Sitzrohres führt zu einem verbessertem Komfort eines Fahrradrahmens durch bevorzugt sowohl elastische als auch dämpfende Eigenschaften des eingesetzten Lagerwerkstoffs. Bevorzugt werden die gewünschten Lagereigenschaften der Führungseinrichtung zwischen dem oberen Rahmenbereich und dem Sitzrohr über eine elastische Lagerung erreicht, welche mittels einer Abstützung zwischen dem oberem Rahmenbereich und dem Sitzrohr über einen Werkstoff mit geeigneten Feder- und Dämpfungseigenschaften wie beispielsweise einem Elastomer gebildet wird.

Die Führungseinrichtung ist bevorzugt so ausgeführt, dass die Bewegung des Sitzrohrs gegenüber dem oberen Rahmenbereich im Wesentlichen in der Ebene der Fahrradlängsachse erfolgt. Dabei kann die Führungseinrichtung verschiedene Ausführungsformen aufweisen, in welchen das Sitzrohr, das zumindest teilweise innerhalb oder außerhalb des oberen Rahmenbereichs angeordnet sein kann in der Ebene der Fahrradlängsachse, beispielsweise kraft-und/ oder formschlüssig geführt wird. In einer bevorzugten Ausführungsform weist die Führungseinrichtung eine Kulissenführung auf, in welcher sich das Sitzrohr zum oberen Rahmenbereich in einer vorbestimmte Weise bewegen kann. Vorzugsweise umfasst die Führungseinrichtung neben oder alternativ zu der Kulissenführung auch eine elastische Lagerung, die das Sitzrohr kraftschlüssig zum oberen Rahmenbereich führt.

In einer weiteren bevorzugten Ausführungsform ist es ebenso möglich, in die Führungseinrichtung Feder-/Dämpfungselemente bekannter Bauart zum Erreichen der gewünschten Federungs- bzw. Dämpfungseigenschaften einzusetzen, wobei nachteilige Auswirkungen aufgrund des hohen Gewichts bzw. des erforderlichen Bauraums für solche Elemente zu beachten sind.

In einer bevorzugten Ausführungsform weist die elastische Lagerung ein Element aus einem elastischen Werkstoff wie beispielsweise einem Elastomer auf, das in einem von dem oberen Rahmenbereich und dem Sitzrohr wenigstens teilweise aufgenommen ist, wodurch eine geeignete Verbindung zwischen oberen Rahmenbereich und Sitzrohr erreicht wird. In einer weiteren, bevorzugten Ausführungsform ist ein elastisches Element in einem von dem oberen Rahmenbereich und dem Sitzrohr verschiebbar aufgenommen. Dabei kann der Raum, in dem das elastisches Element zwischen dem Rahmenbereich und dem Sitzrohr verschiebbar ist, so ausgebildet sein, dass ein Verschieben des elastischen Elements dieses einer höheren bzw. einer geringeren Vorspannung aussetzt, wodurch die Feder- bzw. Dämpfungseigenschaften der elastischen Lagerung der Führungseinrichtung bevorzugt stufenlos einstellbar ist.

Zur Vergrößerung der Bewegungsfähigkeit des Sitzrohres gegenüber dem oberen Rahmenbereich ist im Bereich zwischen der Führungseinrichtung und dem unteren Ende des Sitzrohres vorzugsweise eine Gelenkeinrichtung angeordnet. Diese Gelenkeinrichtung ermöglicht bevorzugt eine Winkelbewegung des oberen Endes des Sitzrohrs gegenüber dem unteren Ende des Sitzrohres in der Ebene der Fahrradlängsachse um einen Drehpunkt, welcher vorzugsweise zwischen dem oberen und unteren Rahmenbereich und insbesondere in etwa mittig zwischen oberen und unterem Rahmenbereich angeordnet ist.

In einer bevorzugten Ausführungsform ist die Gelenkeinrichtung in einem geringen Abstand zu der Führungseinrichtung angeordnet. Vorzugsweise ist dieser Abstand bei einer Ausführungsform, bei der das Sitzrohr in den oberen Rahmenbereich integriert ist, sehr gering. Bei einer derartigen Ausführungsform ist die Gelenkeinrichtung bevorzugt innerhalb der Führungseinrichtung angeordnet. Bei einer integrierten Ausführungsform ist die Führungseinrichtung bevorzugt derart ausgebildet, dass keine weitere Gelenkeinrichtung erforderlich ist.

In einer weiteren bevorzugten Ausführungsform ist die Gelenkeinrichtung so ausgebildet, dass sie ein erstes Gelenkelement aufweist, welches gegenüber einem zweiten Gelenkelement rotatorisch und/ oder translatorisch bewegbar ist. Eine solche Gelenkeinrichtung ist vorzugsweise als Wälz- oder Gleitlager oder einer Kombination aus beiden Lagerarten ausgeführt.

In einer weiteren, bevorzugten Ausführungsform wird die Gelenkeinrichtung von einem Abschnitt des Sitzrohres mit verminderter Steifigkeit gebildet. Eine solche Gestaltung kann durch eine Verdünnung der Wandstärke in einem bestimmten Bereich des Sitzrohres erreicht werden, welcher in der Folge eine verminderte Steifigkeit aufweist. Das Sitzrohr weist damit gelenkige Eigenschaften im Bereich der Wandstärkenverdünnung auf. Gleiches kann durch eine Änderung des Elastizitätsmoduls des Sitzrohres beispielsweise durch Einsatz eines Werkstoffs mit geringerem Elastizitätsmodul wie beispielsweise ein Aramidfaser-Verbundwerkstoff an der Stelle erreicht werden, an der das Sitzrohr gelenkige Eigenschaften aufweisen soll. In einer besonders bevorzugten Ausführungsform weist das Sitzrohr an der Stelle, an der es elastische Eigenschaften aufweisen soll, eine geänderte Querschnittsform wie beispielsweise einen elliptischen Querschnitt auf, dessen kurze Achse parallel zur Fahrradfahrtrichtung angeordnet ist. Ein derartiger Querschnitt verringert das Flächenträgheitsmoment in Richtung der gewünschten Bewegung, wodurch die gewünschte gelenkige Eigenschaft hergestellt werden kann. Auch mittels eines Einsatzes von Federelementen wie beispielsweise in Achsrichtung des Sitzrohrs ausgerichtet angeordnete Blattfedern kann die gewünschte gelenkige Eigenschaft des Sitzrohres erreicht werden.

In einer weiteren bevorzugten Ausgestaltung ist das untere Ende des Sitzrohres nicht am Fahrradrahmen abgestützt. Das untere Ende des Sitzrohres ist damit gegenüber dem Fahrradrahmen beweglich. Bei dieser Ausgestaltung ist zur Erzielung einer verstärkten Beweglichkeit des Sitzrohrs gegenüber dem oberen Rahmenbereich keine Gelenkeinrichtung erforderlich.

Die Winkelbewegung des Sitzrohres erfolgt efindungsgemäß wenigstens hauptsächlich in der Ebene der Fahrradlängsachse. Die Auslenkung um den Drehpunkt der Bewegung am Fahrradrahmen erfolgt bevorzugt in einem Winkelbereich zwischen 0 und 15° und besonders bevorzugt in einem Winkelbereich von 0 bis 10°. Besonders vorteilhaft ist eine Winkelbewegung in einem Bereich zwischen 0 und 5°, da der Fahrer die elastischen Eigenschaften des Fahrradrahmens in diesem Bereich im Wesentlichen nur aufgrund des deutlich verbesserten Komforts gegenüber einem bekannten Fahrradrahmen, jedoch keine Bewegung des Sattels gegenüber dem Lenker oder dem Tretlager wahrnimmt.

Der erfindungsgemäße Fahrradrahmen ermöglicht es, die Komforteigenschaften insbesondere von Rennrädern, Mountainbikes ohne hintere Laufrad-Federung (Hardtail) oder dergleichen, welche sich im Wesentlichen durch eine Minderung von einwirkenden Stöße ergeben, gegenüber bekannten Fahrradrahmen deutlich zu verbessern, ohne eine unerwünschte Verminderung der Steifigkeit des Fahrradrahmens zu verursachen. Die Führungseinrichtung ist so zwischen oberen Rahmenbereich und Sitzrohr in den Fahrradrahmen integriert, dass sich das Erscheinungsbild des Fahrradrahmens gegenüber bekannten Rahmen kaum verändert und durch die zusätzlichen Einrichtungen nur ein sehr geringer Gewichtszuwachs entsteht. Dies ermöglicht in vorteilhafter Weise eine Beibehaltung der konventionellen Diamant-Rahmenform, womit auch die Regelkonformität gemäß den Vorgaben der Radbehörde UCI eingehalten werden kann.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: einen Fahrradrahmen nach einer Ausführung der vorliegenden Erfindung,
- Fig. 2: eine Schnittdarstellung entlang der Linie II - II aus Fig. 1 einer Führungseinrichtung nach einer Ausführung der vorliegenden Erfindung,
- Fig. 3: einen Fahrradrahmen nach einer weiteren Ausführung der vorliegenden Erfindung und
- Fig. 4: eine Teilschnittdarstellung einer weiteren Führungseinrichtung nach einer Ausführung der vorliegenden Erfindung.

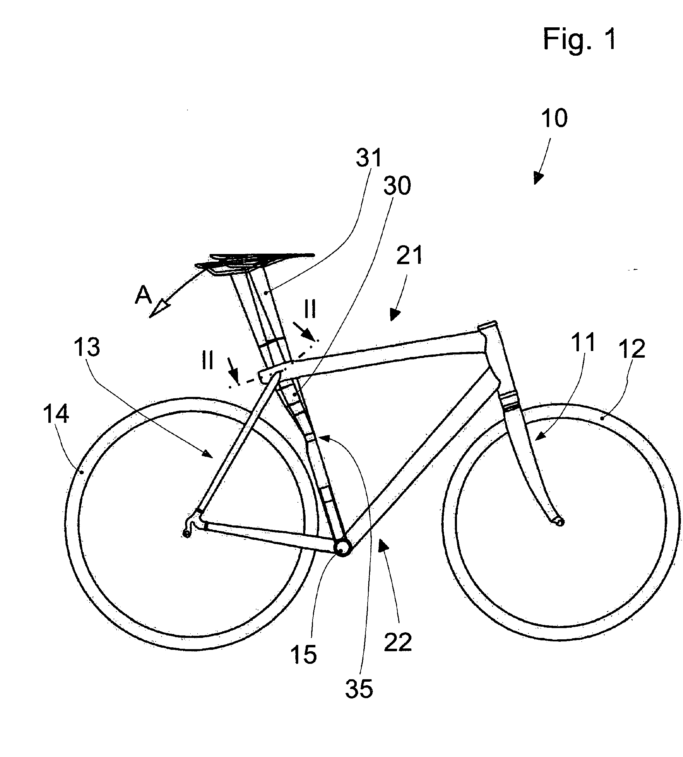

Fig. 1 zeigt einen Fahrradrahmen 10 mit einer ersten Halteeinrichtung 11 für ein erstes Rad 12 und eine zweite Halteeinrichtung 13 für ein zweites Rad 14. Der Fahrradrahmen 10 weist einen oberen Rahmenbereich 21 und einen unteren Rahmenbereich 22 auf. Sowohl der untere Rahmenbereich 22 als auch der obere Rahmenbereich 21 verbinden die erste Halteeinrichtung 11 und die zweite Halteeinrichtung 13. Am unteren Rahmenbereich 22 ist das Tretlager 15 angeordnet sowie das Sitzrohr 30 abgestützt. Im oberen Ende des Sitzrohrs 30 ist eine Sattelstütze 31 aufgenommen, welche den Sattel 32 trägt. Etwa mittig im Bereich zwischen dem oberen und dem unteren Rahmenbereich 21, 22 weist das Sitzrohr 30 eine Gelenkeinrichtung 35 auf, welche den Drehpunkt definiert, um den sich der obere Bereich des Sitzrohres 30 mit dem Sattelrohr 31 und dem Sattel 32 in der vertikalen Ebene B, in welcher die Fahrradlängsachse verläuft, in Richtung des Pfeils A nach hinten bewegen kann. Das Sitzrohr 30 wird dabei im oberen Rahmenbereich 21 von einer Führungseinrichtung geführt, welche im Bereich der Schnittebene II - II angeordnet ist, jedoch in Fig. 1 nicht dargestellt ist.

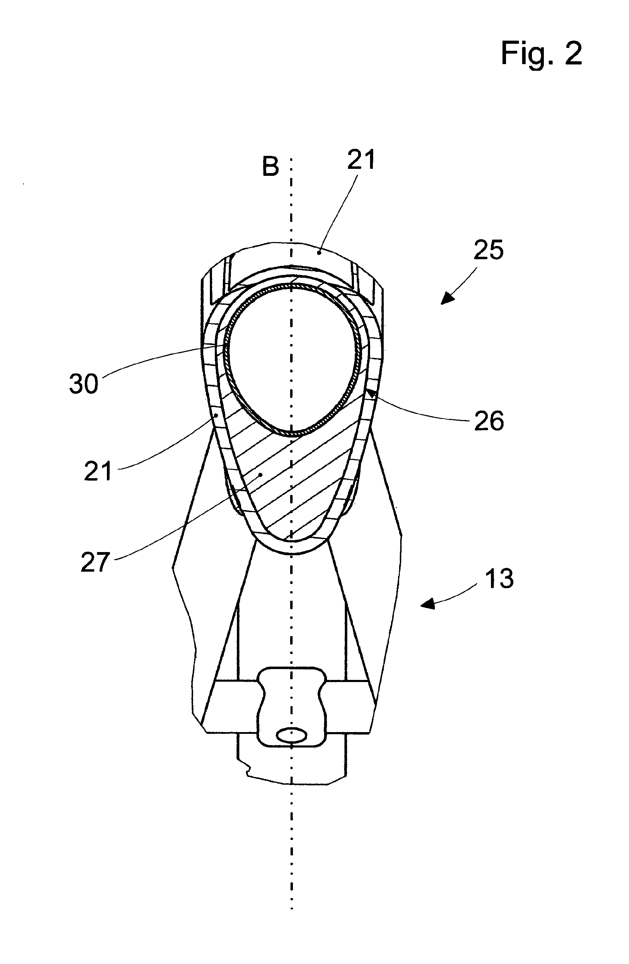

Fig. 2 zeigt eine Schnittdarstellung der Führungseinrichtung 25 entlang der Linie II - II aus Fig. 1. Der Schnitt entlang der Linie II - II verläuft durch den oberen Rahmenbereich 21 und schneidet kurz vor dem Sitzrohr 30 den oberen Rahmenbereich. Ferner sind mit dem oberen Rahmenbereich 21 verbundene Elemente der zweiten Halteeinrichtung 13 dargestellt. Die Führungseinrichtung 25 umfasst eine innerhalb des oberen Rahmenbereichs 21 ausgebildete Aufnahme 26, deren innere Abmessungen größer als die äußeren Abmessungen des Sitzrohrs 30 sind, so dass im Innenbereich der Aufnahme 26 das Sitzrohr 30 beweglich aufnehmbar ist. Zwischen der Aufnahme 26 und dem Sitzrohr 30 ist ein elastisches Element 27 angeordnet, welches sowohl elastische als auch dämpfende Eigenschaften aufweist.

Das Sitzrohr im vorderen und seitlichen Bereich umgebend, also in Fahrradfahrtrichtung vor bis seitlich über den größten Abstand des Sitzrohrs zur vertikalen Ebene B hinaus befindet sich zwischen dem Sitzrohr 30 und der Innenwand der Aufnahme 26 ein im Vergleich zum Durchmesser des Sitzrohres geringer Abstand, in dem ein entsprechend dünner Teilbereich des elastischen Elements 27 angeordnet ist. Die elastischen Eigenschaften sind daher in diesem Bereich nur gering ausgeprägt, so dass eine nennenswerte Bewegung des Sitzrohrs 30 in senkrecht zur vertikalen Ebene B und in Fahrradfahrtrichtung weisenden Richtungen nicht möglich ist.

In Richtung entgegen der Fahrradfahrrichtung befindet sich dagegen ein vergleichsweise großer Bereich, der von einem breiten Teilbereich des elastischen Elements 27 gefüllt ist. Abhängig von der Elastizität dieses elastischen Elements 27 kann das Sitzrohr 30 eine elastische Bewegung in der vertikalen Ebene B in einer Richtung entgegen der Fahrradfahrtrichtung ausführen. Die Aufnahme 26 im oberen Rahmenbereich 21 weist eine entgegen der Fahrradfahrtrichtung tropfenförmig verengte Form auf, so dass die Bewegung des Sitzrohres 30 innerhalb der Führungseinrichtung 25 geführt ist.

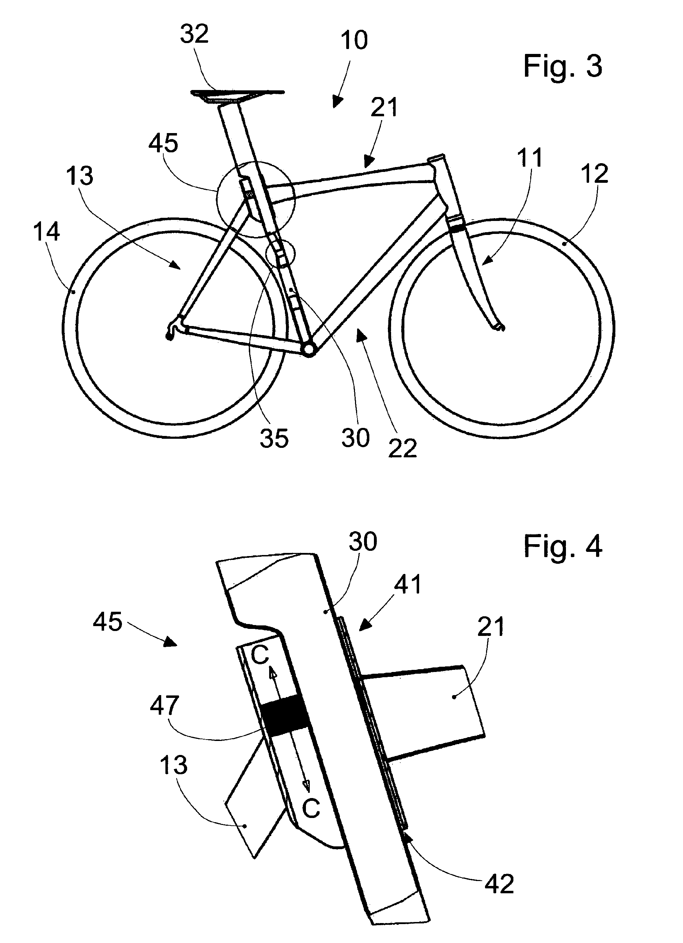

Fig. 3 zeigt einen Fahrradrahmen 10 nach einer weiteren Ausführung der vorliegenden Erfindung. Gleiche Elemente des Fahrradrahmens 10 sind in Fig. 3 mit den gleichen Bezugszeichen wie beim in Fig. 1 dargestellten Fahrradrahmen 10 bezeichnet. Die beiden Fahrradrahmen 10 unterscheiden sich durch unterschiedlich ausgebildete Führungseinrichtungen 25 bzw. 45. Die elastischen bzw. dämpfenden Eigenschaften der Führungseinrichtung 25 des in Fig. 3 dargestellten Fahrradrahmens 10 sind einstellbar. Ferner weist der Fahrradrahmen 10 ein Sitzrohr 30 auf, welches so ausgebildet ist, dass an seinem oberen Ende der Sattel 32 befestigt ist. Eine Sattelstütze 31 ist bei diesem Ausführungsbeispiel nicht vorgesehen. Auch das Sitzrohr 30 dieser Ausführungsform weist eine Gelenkeinrichtung 35 auf, welche den Drehpunkt einer Winkelbewegung des darüber angeordneten Bereichs des Sitzrohrs 30 definiert.

Fig. 4 zeigt eine Teilschnittdarstellung der Führungseinrichtung 25 des Fahrradrahmens 10 aus Fig. 3. Am oberen Rahmenbereich 21 ist die Führungseinrichtung 45 angeordnet, welche eine Aufnahme 41 aufweist. Der obere Rahmenbereich 21 ist ferner mit Elementen einer zweiten Halteeinrichtung 13 verbunden. Das Sitzrohr 30 ist in der Aufnahme 41 in Längsrichtung aufgenommen und stützt sich in einer nach vorne und zur Seite weisenden Richtung über einen elastischen Werkstoff 42 an der Aufnahme 41 ab. Entgegen der Fahrradfahrtrichtung stützt sich das Sitzrohr über ein elastisches Element 47 an der Aufnahme 41 ab. Das elastische Element 47 ist so zwischen dem Sitzrohr 30 und der Aufnahme 41 angeordnet und ausgebildet, dass die Bewegung des Sitzrohrs 30 in der Führungseinrichtung 45 geführt ist. Ein Verschieben des elastischen Elements 47 entlang des Pfeils C bewirkt eine Veränderung der elastischen sowie dämpfenden Eigenschaften der Führungseinrichtung 25, wodurch ein Fahrradfahrer die Komforteigenschaften seines Fahrradrahmens 10 individuell einstellen kann.

## Patentansprüche

1. Fahrradrahmen, insbesondere für Rennräder, Mountainbikes oder dergleichen, mit
einer ersten Halteeinrichtung (11) für ein erstes Rad (12) und einer zweiten Halteeinrichtung (13) für ein zweites Rad (14) sowie mit einem oberen und einem unteren Rahmenbereich (21, 22), über welche die beiden Haltebereiche (11, 13) verbunden sind, und einem Sitzrohr (30), welches ein oberes und ein unteres Ende aufweist,
**dadurch gekennzeichnet, dass**
eine Führungseinrichtung (25) das Sitzrohr (30) im oberen Rahmenbereich (21) derart beweglich führt, dass das obere Ende des Sitzrohrs eine Winkelbewegung gegenüber dem unteren Ende des Sitzrohres ausführen kann.

2. Fahrradrahmen gemäß Anspruch 1, **dadurch gekennzeichnet, dass** das Sitzrohr (30) integral mit dem oberen Rahmenbereich (21) ausgebildet ist.

3. Fahrradrahmen gemäß einem der vorhergehenden Ansprüche, **dadurch gekennzeichnet, dass** die Bewegung des Sitzrohrs (30) gegenüber dem oberen Rahmenbereich (21) im Wesentlichen in einer Ebene erfolgt, in welcher die Fahrradlängsachse verläuft.

4. Fahrradrahmen gemäß einem der vorhergehenden Ansprüche, **dadurch gekennzeichnet, dass** die Führungseinrichtung (25) eine elastische Lagerung aufweist, wobei insbesondere das Sitzrohr (30) und der obere Rahmenbereich (21) über ein elastisches Element (27) verbunden sind.

5. Fahrradrahmen gemäß Anspruch 4, **dadurch gekennzeichnet, dass** das elastische Element (27) in einem von dem oberen Rahmenelement (21) und dem Sitzrohr (30) wenigstens teilweise aufgenommen ist.

6. Fahrradrahmen gemäß Anspruch 5, **dadurch gekennzeichnet, dass** das elastische Element (27) in einem von dem oberen Rahmenelement (21) und dem Sitzrohr (30) verschiebbar aufgenommen ist.

7. Fahrradrahmen gemäß einem der vorhergehenden Ansprüche, **dadurch gekennzeichnet, dass** die Führungseinrichtung (25) eine Kulissenführung aufweist.

8. Fahrradrahmen gemäß einem der vorhergehenden Ansprüche, **dadurch gekennzeichnet, dass** im Sitzrohr (30) zwischen der Führungseinrichtung (25) und dem unteren Ende des Sitzrohrs eine Gelenkeinrichtung (35) angeordnet ist.

9. Fahrradrahmen gemäß Anspruch 8, **dadurch gekennzeichnet, dass** die Gelenkeinrichtung (35) ein erstes Gelenkelement umfasst, das zu einem zweiten Gelenkelement drehbar und/ oder verschieblich gelagert ist.

10. Fahrradrahmen gemäß Anspruch 9, **dadurch gekennzeichnet, dass** die Gelenkeinrichtung (35) ein Wälz- und/ oder Gleitlager ist.

11. Fahrradrahmen gemäß Anspruch 8, **dadurch gekennzeichnet, dass** die Gelenkeinrichtung (35) durch einen elastischen Abschnitt des Sitzrohres (30) gebildet ist.

12. Fahrradrahmen gemäß Anspruch 11, **dadurch gekennzeichnet, dass** der elastische Abschnitt des Sitzrohres (30) durch eine Wandstärkenverdünnung, eine Elastizitätsmoduländerung und/ oder eine Querschnittsformänderung gebildet ist.

13. Fahrradrahmen gemäß einem der Ansprüche 1 bis 7, **dadurch gekennzeichnet, dass** das untere Ende des Sitzrohrs (30) gegenüber dem Fahrradrahmen (10) beweglich ist.

14. Fahrradrahmen gemäß einem der vorhergehenden Ansprüche, **dadurch gekennzeichnet, dass** die Winkelbewegung des oberen gegenüber dem unteren Ende des Sitzrohres in einem Bereich zwischen 0 und 15°, insbesondere in einem Bereich zwischen 0 und 10°und besonders bevorzugt in einem Bereich zwischen 0 und 5° erfolgt.

15. Fahrradrahmen gemäß einem der vorhergehenden Ansprüche, **dadurch gekennzeichnet, dass** das Sitzrohr (30) bei vertikal stehendem Fahrrad im Wesentlichen vertikal verläuft.

16. Fahrradrahmen gemäß einem der vorhergehenden Ansprüche, **dadurch gekennzeichnet, dass** eine Sattelstütze (31) relativ zu dem Sitzrohr (30) verstellbar an dem Sitzrohr befestigt ist oder integral mit dem Sitzrohr (30) ausgebildet ist.
